# EUROPEAN PATENT APPLICATION

(11) **EP 4 568 340 A1**
(43) Date of publication of application: **11.06.2025**
(21) Application number: 23870182.5
(22) Date of filing: 04.09.2023
(51) Int. Cl.: H04W 28/06

(54) **INFORMATION TRANSMISSION METHOD AND APPARATUS**

(30) Priority: 30.09.2022 CN 202211214556
(71) Applicant: ZTE CORPORATION, Shenzhen, Guangdong 518057 (CN)
(72) Inventor: LI, Lin, Shenzhen, Guangdong 518057 (CN); DU, Xiangwen, Shenzhen, Guangdong 518057 (CN); ZHAN, Yajun, Shenzhen, Guangdong 518057 (CN)
(74) Representative: Pennacchio, Salvatore Giovanni
(86) International application number: PCT/CN2023/116831
(87) International publication number: WO 2024/066942

(57) **Abstract**

Embodiments of the invention provide an information transmission method and apparatus. The method includes mapping a port into N ports through a device side time sensitive network translator (DS-TT), where N is an integer greater than or equal to 2; establishing N protocol data unit (PDU) sessions corresponding to the N ports between the DS-TT and a network side time sensitive network translator (NW-TT); and copying, by the DS-TT, one uplink message into N uplink messages, and transmitting the N uplink messages to the NW-TT through the N PDU sessions.

## Description

### Cross-Reference to Related Application

The invention is based on Chinese Patent Application CN202211214556.1, filed on September 30, 2022 and entitled "Information Transmission Method and apparatus", and claims the priority to the invention, which is incorporated in its entirety herein by reference.

### Technical Field

Embodiments of the invention relate to the field of communication, and particularly relate to an information transmission method and apparatus.

### Background

According to a 3rd generation partnership project (3GPP) protocol, when a 5th generation system (5GS) bridge and an external network are integrated into a time sensitive network (TSN), the 5GS bridge serves as one or more TSN bridges of the TSN. For each 5GS bridge of the TSN, all ports on a network side TSN translator (NW-TT) support connection to the TSN, and a port on user equipment (UE)/a device side TSN translator (DS-TT) is associated with a protocol data unit (PDU) session. Thus, connection to the TSN is provided. For a given user plane function (UPF), only one PDU session is available for each DS-TT port.

When an end station/TSN bridge transmits a message to the UE/DS-TT, a UE/DS-TT port transmits the message to the UPF/NW-TT through one PDU session, and the UPF/NW-TT transmits the message to other TSN bridges or reception end stations. When PDU session interruption or air interface packet loss is caused due to abnormal conditions, transmission of the message in the network will be interrupted abnormally, and reliability of message transmission cannot be guaranteed.

### Summary

Embodiments of the invention provide an information transmission method and apparatus, so as to at least solve problems that a protocol data unit session is interrupted and reliability of message transmission cannot be guaranteed in the related art.

One Embodiment of the invention provides an information transmission method. The method includes: mapping one port into N ports through a device side time sensitive network translator (DS-TT), where N is an integer greater than or equal to 2; establishing N protocol data unit (PDU) sessions corresponding to the N ports between the DS-TT and a network side time sensitive network translator (NW-TT); and copying, by the DS-TT, one uplink message into N uplink messages, and transmitting the N uplink messages to the NW-TT through the N PDU sessions.

Another embodiment of the invention provides an information transmission apparatus. The apparatus includes: a device side time sensitive network translator (DS-TT). The DS-TT includes: a port mapping module configured to map one port of the DS-TT into N ports, where N is an integer greater than or equal to 2; a session establishing module configured to establish N protocol data unit (PDU) sessions corresponding to the N ports between the DS-TT and a network side time sensitive network translator (NW-TT); and an uplink message copying module configured to copy one uplink message into N uplink messages, and transmit the N uplink messages to the NW-TT through the N PDU sessions.

Yet another embodiment of the invention further provides a computer-readable storage medium. The computer-readable storage medium stores a computer program. The computer program is configured to execute steps of any one of the above method embodiments at runtime.

Still another embodiment of the invention further provides an electronic apparatus. The electronic apparatus includes a memory and a processor. The memory stores a computer program. The processor is configured to run the computer program to execute steps of any one of the above method embodiments.

### Brief Description of the Drawings

Fig. 1 is a block diagram of a hardware structure of a mobile terminal of an information transmission method of an embodiment of the invention;
Fig. 2 is a flow diagram of an information transmission method according to an embodiment of the invention;
Fig. 3 is a flow diagram of an information transmission method according to an embodiment of the invention;
Fig. 4 is a flow diagram of an information transmission method according to an embodiment of the invention;
Fig. 5 is a flow diagram of an information transmission method according to an embodiment of the invention;
Fig. 6 is a flow diagram of an information transmission method according to an embodiment of the invention;
Fig. 7 is a flow diagram of an information transmission method according to an embodiment of the invention;
Fig. 8 is a flow diagram of an information transmission method according to an embodiment of the invention;
Fig. 9 is a flow diagram of an information transmission method according to an embodiment of the invention;
Fig. 10 is a block diagram of a structure of an information transmission apparatus according to an embodiment of the invention;
Fig. 11 is a block diagram of a structure of an information transmission apparatus according to an embodiment of the invention;
Fig. 12 is a block diagram of a structure of an information transmission apparatus according to an embodiment of the invention;
Fig. 13 is a block diagram of a structure of an information transmission apparatus according to an embodiment of the invention;
Fig. 14 is a block diagram of a structure of an information transmission apparatus according to an embodiment of the invention;
Fig. 15 is a network architecture diagram of an existing 5G and time sensitive network (TSN) integrated system according to a scene embodiment of the invention;
Fig. 16 is a flow diagram of a message uplink method according to a scene embodiment of the invention;
Fig. 17 is a schematic diagram of a port redundancy elimination principle according to a scene embodiment of the invention;
Fig. 18 is a flow diagram of a message downlink method according to a scene embodiment of the invention;
Fig. 19 is a schematic diagram of an information transmission method according to a scene embodiment of the invention;
Fig. 20 is a flow diagram of a method for transmitting an uplink message according to a scene embodiment of the invention; and
Fig. 21 is a flow diagram of a method for transmitting a downlink message according to a scene embodiment of the invention.

### Detailed Description of the Embodiments

Embodiments of the invention will be described in detail below with reference to the accompanying drawings in conjunction with the embodiments.

It should be noted that the terms such as "first" and "second" in the description and claims of the embodiments of the invention and in the drawings are used to distinguish between similar objects and not necessarily to describe a particular order or sequential order.

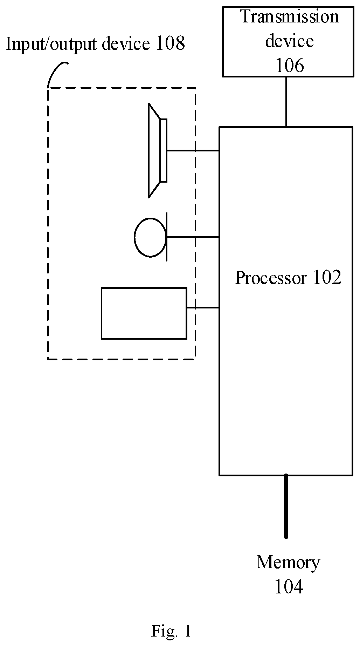

The method embodiments provided by the invention may be executed in a mobile terminal, a computer terminal, or a similar computation apparatus. With running on a mobile terminal as an instance, Fig. 1 is a block diagram of a hardware structure of a mobile terminal of an information transmission method of an embodiment of the invention. As shown in Fig. 1, the mobile terminal may include one or more (only one is shown in Fig. 1) processors 102 (the processor 102 may include, but is not limited to, a processing apparatus, for instance, a microcontroller unit (MCU) or a field programmable gate array (FPGA)) and a memory 104 configured to store data. The mobile terminal may further include a transmission device 106 having a communication function and an input/output device 108. Those of ordinary skill in the art may understand that a structure shown in Fig. 1 is merely schematic and does not limit a structure of the mobile terminal. For instance, the mobile terminal may further include more or fewer components than those shown in Fig. 1, or have a different configuration from that shown in Fig. 1.

The memory 104 may be configured to store a computer program such as a software program and module of application software, and for instance, the computer program corresponding to the information transmission method in the embodiments of the invention. The processor 102 executes various functional applications and data processing by running the computer program stored in the memory 104, that is, the method is implemented. The memory 104 may include a high-speed random access memory, and may further include a non-volatile memory, and for instance, one or more magnetic storage apparatuses, flash memories, or other non-volatile solid-state memories. In some instances, the memory 104 may further include a memory remotely arranged with respect to the processor 102. The remote memory may be connected to the mobile terminal through a network. Instances of the network include, but are not limited to, the Internet, an enterprise intranet, a local area network, a mobile communication network, and a combination thereof.

The transmission device 106 is configured to receive or transmit data through a network. Specific instances of the network may include a wireless network provided by a communication provider of the mobile terminal. In one instance, the transmission apparatus 106 includes one network interface controller (NIC) that may be connected to other network devices through a base station, so as to be in communication with the Internet. In one instance, the transmission device 106 may be a radio frequency (RF) module that is configured to be in wireless communication with the Internet.

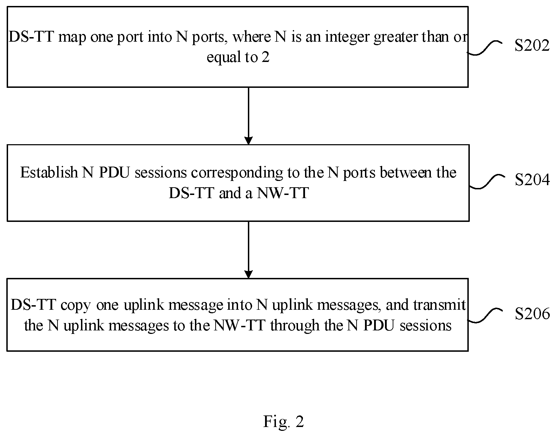

The embodiment provides an information transmission method. The method runs on the mobile terminal. Fig. 2 is a flow diagram of the information transmission method according to an embodiment of the invention. As shown in Fig. 2, the flow includes the following steps:
S202, one port is mapped into N ports through a device side time sensitive network translator (DS-TT). N is an integer greater than or equal to 2.
S204, N protocol data unit (PDU) sessions corresponding to the N ports are established between the DS-TT and a network side time sensitive network translator (NW-TT).
S206, the DS-TT copies one uplink message into N uplink messages, and transmits the N uplink messages to the NW-TT through the N PDU sessions.

Through the above steps, the one port is mapped into the N ports through the device side time sensitive network translator (DS-TT), where N is an integer greater than or equal to 2; the N protocol data unit (PDU) sessions corresponding to the N ports are established between the DS-TT and the network side time sensitive network translator (NW-TT); and the DS-TT copies the one uplink message into the N uplink messages, and transmits the N uplink messages to the NW-TT through the N PDU sessions. Problems that a PDU session is interrupted and reliability of message transmission cannot be guaranteed in the related art are solved, and an effect of ensuring reliability of message transmission in a case with abnormal interruption of the PDU session is achieved.

An execution entity of the above steps may be a base station, a terminal, etc., and is not limited herein.

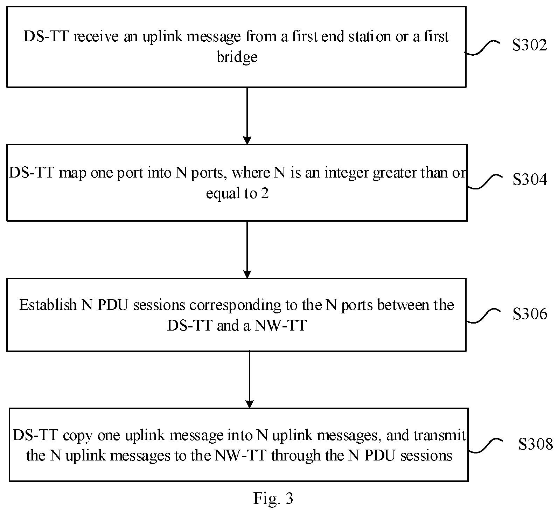

In an embodiment, before the one port is mapped into the N ports through the device side time sensitive network translator (DS-TT), the method further includes the following step: the DS-TT receives an uplink message from a first end station or a first bridge. Fig. 3 is a flow diagram of an information transmission method according to an embodiment of the invention. As shown in Fig. 3, the flow includes the following steps:
S302, a DS-TT receives an uplink message from a first end station or a first bridge.
S304, one port is mapped into N ports through a device side time sensitive network translator (DS-TT). N is an integer greater than or equal to 2.
S306, N protocol data unit (PDU) sessions corresponding to the N ports are established between the DS-TT and a network side time sensitive network translator (NW-TT).
S308, the DS-TT copies one uplink message into N uplink messages, and transmits the N uplink messages to the NW-TT through the N PDU sessions.

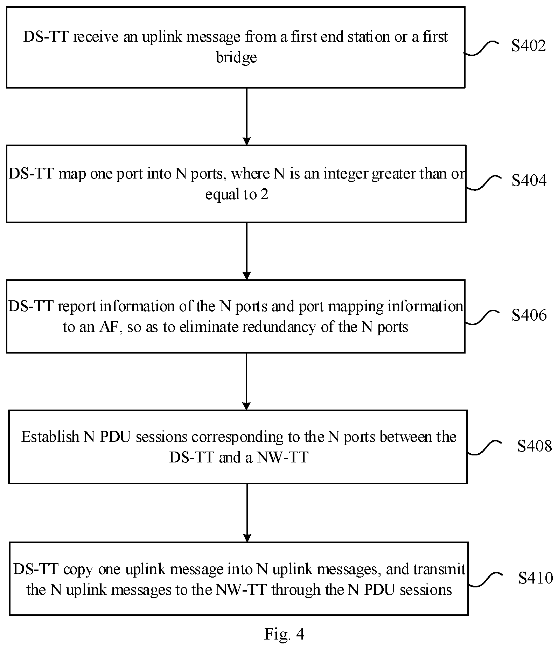

In an embodiment, after the one port is mapped into the N ports through the device side time sensitive network translator (DS-TT), the method further includes the following step: the DS-TT reports information of the N ports and port mapping information to an application function (AF), so as to eliminate redundancy of the N ports. Fig. 4 is a flow diagram of an information transmission method according to an embodiment of the invention. As shown in Fig. 4, the flow includes the following steps:
S402, a DS-TT receives an uplink message from a first end station or a first bridge.
S404, one port is mapped into N ports through a device side time sensitive network translator (DS-TT). N is an integer greater than or equal to 2.
S406, the DS-TT reports information of the N ports and port mapping information to an application function (AF) to eliminate redundancy of the N ports.
S408, N protocol data unit (PDU) sessions corresponding to the N ports are established between the DS-TT and a network side time sensitive network translator (NW-TT).
S410, the DS-TT copies one uplink message into N uplink messages, and transmits the N uplink messages to the NW-TT through the N PDU sessions.

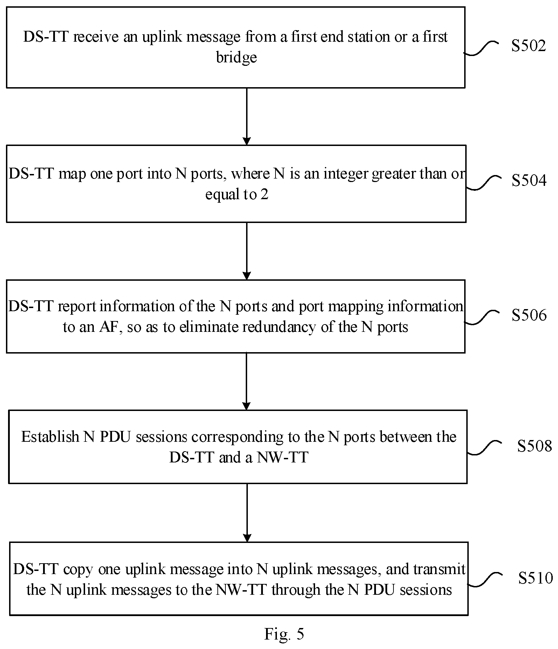

In an embodiment, after the DS-TT copies the one uplink message into the N uplink messages, the method further includes the following step: the DS-TT adds redundant labels to the N uplink messages. Fig. 5 is a flow diagram of an information transmission method according to an embodiment of the invention. As shown in Fig. 5, the flow includes the following steps:
S502, a DS-TT receives an uplink message from a first end station or a first bridge.
S504, one port is mapped into N ports through a device side time sensitive network translator (DS-TT). N is an integer greater than or equal to 2.
S506, the DS-TT reports information of the N ports and port mapping information to an application function (AF) to eliminate redundancy of the N ports.
S508, N protocol data unit (PDU) sessions corresponding to the N ports are established between the DS-TT and a network side time sensitive network translator (NW-TT).
S510, the DS-TT copies one uplink message into N uplink messages, the DS-TT adds redundant labels to the N uplink messages, and the N uplink messages are transmitted to the NW-TT through the N PDU sessions.

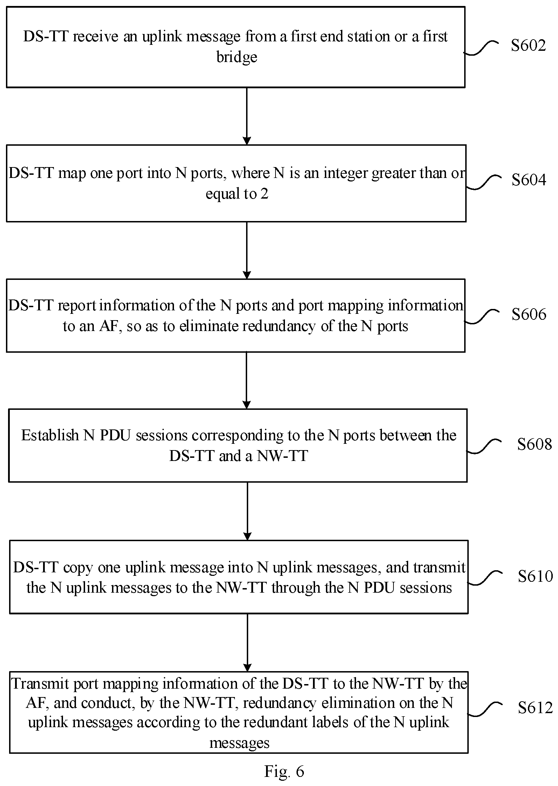

In an embodiment, after the N uplink messages are transmitted to the NW-TT through the N PDU sessions, the method further includes the following steps: port mapping information of the DS-TT is transmitted to the NW-TT by an application function (AF), and the NW-TT conducts redundancy elimination on the N uplink messages according to redundant labels of the N uplink messages. Fig. 6 is a flow diagram of an information transmission method according to an embodiment of the invention. As shown in Fig. 6, the flow includes the following steps:
S602, a DS-TT receives an uplink message from a first end station or a first bridge.
S604, one port is mapped into N ports through a device side time sensitive network translator (DS-TT). N is an integer greater than or equal to 2.
S606, the DS-TT reports information of the N ports and port mapping information to an application function (AF) to eliminate redundancy of the N ports.
S608, N protocol data unit (PDU) sessions corresponding to the N ports are established between the DS-TT and a network side time sensitive network translator (NW-TT).
S610, the DS-TT copies one uplink message into N uplink messages, the DS-TT adds redundant labels to the N uplink messages, and the N uplink messages are transmitted to the NW-TT through the N PDU sessions.
S612, port mapping information of the DS-TT is transmitted to the NW-TT by the application function (AF), and the NW-TT conducts redundancy elimination on the N uplink messages according to the redundant labels of the N uplink messages.

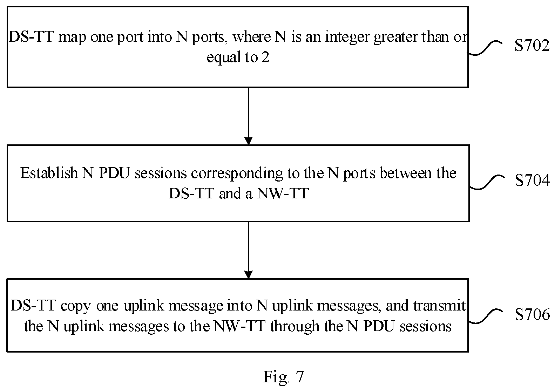

In an embodiment, after the N protocol data unit (PDU) sessions corresponding to the N ports are established, the method further includes the following steps: the NW-TT copies one downlink message into N downlink messages, and the N downlink messages are transmitted to the DS-TT through the N PDU sessions. Fig. 7 is a flow diagram of an information transmission method according to an embodiment of the invention. As shown in Fig. 7, the flow includes the following steps:
S702, one port is mapped into N ports through a device side time sensitive network translator (DS-TT). N is an integer greater than or equal to 2.
S704, N protocol data unit (PDU) sessions corresponding to the N ports are established between the DS-TT and a network side time sensitive network translator (NW-TT).
S706, the NW-TT copies one downlink message into N downlink messages, and transmits the N downlink messages to the DS-TT through the N PDU sessions.

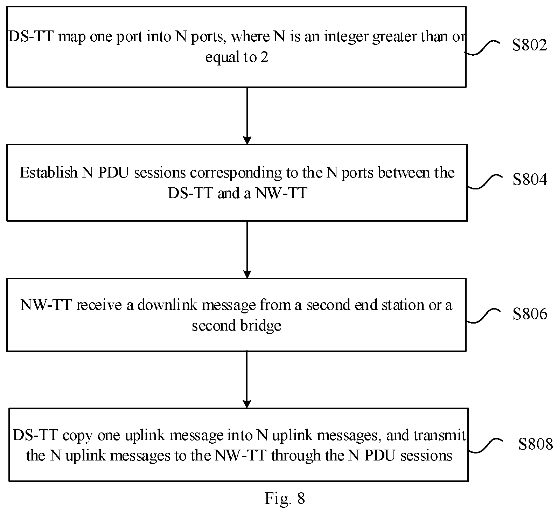

In an embodiment, before the NW-TT copies the one downlink message into the N downlink messages, the method further includes the following step: the NW-TT receives a downlink message from a second end station or a second bridge. Fig. 8 is a flow diagram of an information transmission method according to an embodiment of the invention. As shown in Fig. 8, the flow includes the following steps:
S802, one port is mapped into N ports through a device side time sensitive network translator (DS-TT). N is an integer greater than or equal to 2.
S804, N protocol data unit (PDU) sessions corresponding to the N ports are established between the DS-TT and a network side time sensitive network translator (NW-TT).
S806, the NW-TT receives a downlink message from a second end station or a second bridge.
S808, the NW-TT copies one downlink message into N downlink messages, and transmits the N downlink messages to the DS-TT through the N PDU sessions.

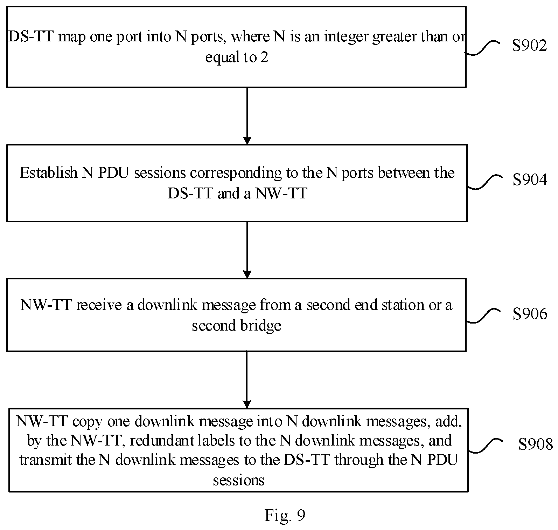

In an embodiment, after the NW-TT copies one downlink message into N downlink messages, the method further includes the following step: the NW-TT adds redundant labels to the N downlink messages. Fig. 9 is a flow diagram of an information transmission method according to an embodiment of the invention. As shown in Fig. 9, the flow includes the following steps:
S902, one port is mapped into N ports through a device side time sensitive network translator (DS-TT). N is an integer greater than or equal to 2.
S904, N protocol data unit (PDU) sessions corresponding to the N ports are established between the DS-TT and a network side time sensitive network translator (NW-TT).
S906, the NW-TT receives a downlink message from a second end station or a second bridge.
S908, the NW-TT copies one downlink message into N downlink messages, the NW-TT adds redundant labels to the N downlink messages, and the N downlink messages are transmitted to the DS-TT through the N PDU sessions.

From the description of embodiments, those skilled in the art may clearly understand that the methods according to the embodiments may be implemented by means of software plus a necessary general-purpose hardware platform, or by means of hardware. In many cases, the former is a better embodiment. With such understanding, technical solutions of the embodiments of the invention, in essence or from the view of part contributing to the prior art, may be embodied in a form of a software product. The computer software product is stored in a storage medium (such as a read-only memory (ROM)/a random access memory (RAM), and an optical disk) and includes several instructions configured to enable one terminal device (which may be a mobile phone, a computer, a server, a network device, etc.) to execute the method according to each of the embodiments of the invention.

The embodiment further provides an information transmission apparatus. The apparatus is configured to implement the embodiments and preferred embodiments, and the described contents will not be repeated. The term "module", as used below, may implement a combination of software and/or hardware having predetermined functions. While the apparatus described in the following embodiments is preferably implemented in software, implementation in hardware or a combination of software and hardware is also possible and conceivable.

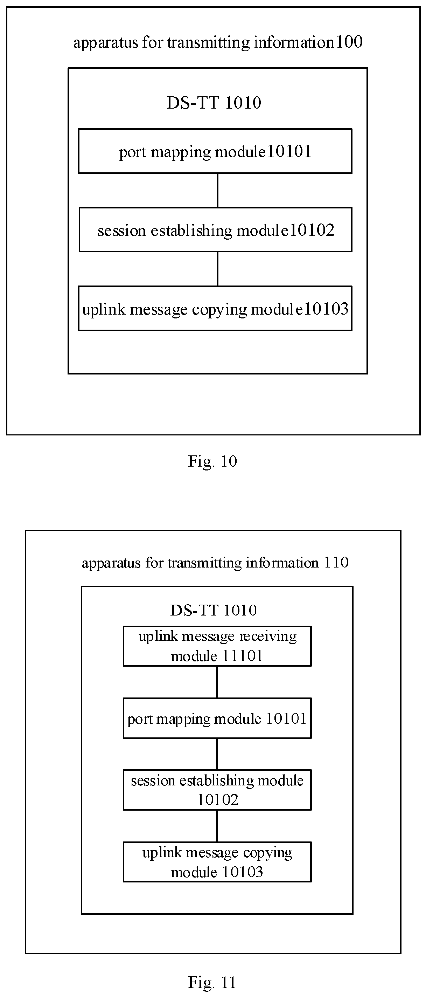

Fig. 10 is a block diagram of a structure of an information transmission apparatus according to an embodiment of the invention. As shown in Fig. 10, the apparatus 100 for transmitting information includes: a DS-TT 1010. The DS-TT 1010 includes: a port mapping module 10101 configured to map one port of the DS-TT into N ports, where N is an integer greater than or equal to 2; a session establishing module 10102 configured to establish N protocol data unit (PDU) sessions corresponding to the N ports between the DS-TT and a network side time sensitive network translator (NW-TT); and an uplink message copying module 10103 configured to copy one uplink message into N uplink messages, and transmit the N uplink messages to the NW-TT through the N PDU sessions.

In an embodiment, Fig. 11 is a block diagram of a structure of an information transmission apparatus according to an embodiment of the invention. As shown in Fig. 11, the apparatus 110 for transmitting information includes a DS-TT 1010. In addition to all the modules in Fig. 10, the DS-TT 1010 further includes: an uplink message receiving module 11101 configured to receive an uplink message from a first end station or a first bridge.

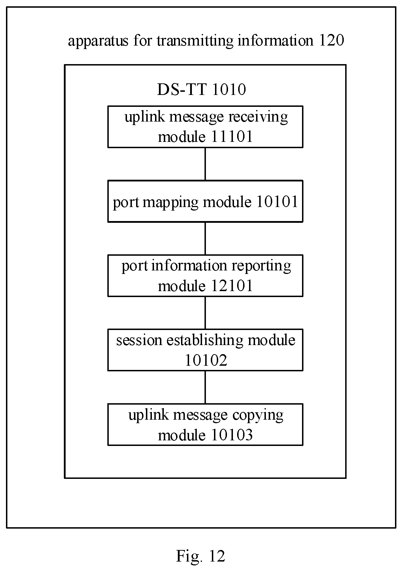

In an embodiment, Fig. 12 is a block diagram of a structure of an information transmission apparatus according to an embodiment of the invention. As shown in Fig. 12, the apparatus 120 for transmitting information includes a DS-TT 1010. In addition to all the modules in Fig. 11, the DS-TT 1010 further includes: a port information reporting module 12101 configured to report information of N ports and port mapping information to an application function (AF) to eliminate redundancy of the N ports.

In an embodiment, the uplink message copying module 10103 is further configured to **add** redundant labels to the N uplink messages.

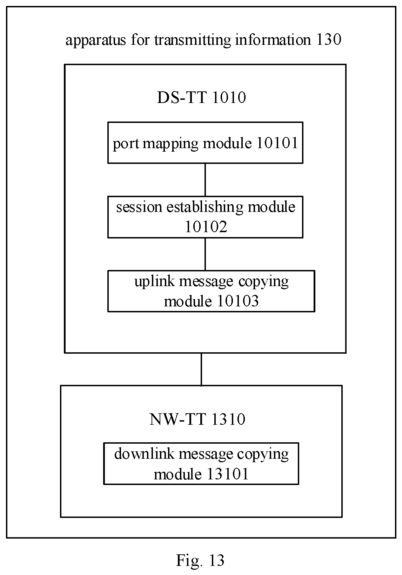

In one illustrative embodiment, Fig. 13 is a block diagram of a structure of an information transmission apparatus according to an embodiment of the invention. As shown in Fig. 13, in addition to the DS-TT 1010, the apparatus 130 for transmitting information further includes: a NW-TT 1310. The NW-TT 1310 includes: a downlink message copying module 13101 configured to copy one downlink message into N downlink messages, and transmit the N downlink messages to the DS-TT through N PDU sessions.

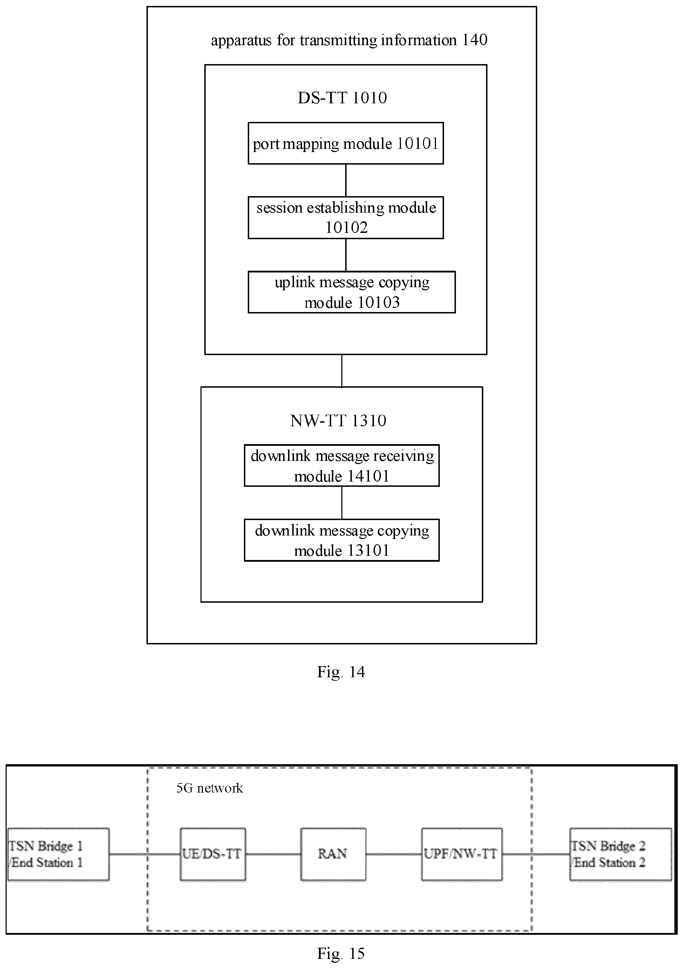

In an embodiment, Fig. 14 is a block diagram of a structure of an information transmission apparatus according to an embodiment of the invention. As shown in Fig. 14, in addition to all the modules in Fig. 13, the NW-TT 1310 of the apparatus 140 for transmitting information further includes: a downlink message receiving module 14101 configured to receive a downlink message from a second end station or a second bridge.

In an embodiment, the downlink message copying module 13101 is further configured to **add** redundant labels to the N downlink messages.

It should be noted that all the modules may be implemented by software or hardware, and the latter may be implemented as follows, but is not limited thereto: the modules are located in a same processor; or all the modules are separately located in different processors in any combination form.

An embodiment of the invention further provides a computer-readable storage medium. The computer-readable storage medium stores a computer program. The computer program is configured to execute the steps of any one of the method embodiments at runtime.

In an embodiment, the computer-readable storage medium may include, but is not limited to, a universal serial bus (USB) flash disk, read-only memory (ROM), a random access memory (RAM), a mobile hard disk, a magnetic disk, an optical disk, and various media that may store computer programs.

An embodiment of the invention further provides an electronic apparatus. The electronic apparatus includes a memory and a processor. The memory stores a computer program. The processor is configured to run the computer program to execute the steps of any one of the method embodiments.

In an embodiment, the electronic apparatus may further include a transmission device and an input/output device. The transmission device is connected to the processor, and the input/output device is connected to the processor.

Reference may be made to instances described in the embodiments and illustrative embodiments for specific instances in the embodiment, which will not be repeated in the embodiment herein.

Obviously, those skilled in the art should understand that all modules or steps of the embodiments of the invention may be implemented with a general-purpose computation apparatus, and may be centralized on a single computation apparatus or distributed on a network consisting of a plurality of computation apparatuses. The modules or steps may be implemented with program codes executable by the computation apparatus, such that the modules or steps may be stored in a storage apparatus to be executed by the computation apparatus. Moreover, in some cases, the steps shown or described may be executed in an order different from that herein, the modules or steps may be fabricated separately as individual integrated circuit modules, or a plurality of modules or steps in the modules or steps may be fabricated as a single integrated circuit module for implementation. Thus, the embodiments of the invention are not limited to any combination of particular hardware and software.

To make those skilled in the art better understand the technical solutions of the embodiments of the invention, the technical solutions of the embodiments of the invention will be described below with reference to specific scene embodiments.

### Scene embodiment 1

Fig. 15 is a network architecture diagram of an existing 5G and time sensitive network (TSN) integrated system according to a scene embodiment of the invention. As shown in Fig. 15, according to a 3rd generation partnership project (3GPP) protocol, the 5G and TSN integrated system is implemented through the following method. For a given user plane function (UPF), only one PDU session is available for each DS-TT port. A TSN bridge/end station is a TSN node device or end station. The end station transmits a message to a UE/DS-TT, the UE/DS-TT transmits the message to a UPF/NW-TT through the PDU session, and then the UPF/NW-TT transmits the message to the TSN bridge at a network side or a reception end station. Port management information of the UE/DS-TT may be stored in an AF apparatus. The UPF/NW-TT may obtain the port management information of the UE/DS-TT from the AF.

At present, in a TSN, when a message is transmitted between the UE/DS-TT and the UPF/NW-TT through the PDU session, the PDU session may be abnormally interrupted, resulting in unstable network transmission.

A scene embodiment of the invention provides an information transmission method, such that high reliability in a 5GS bridge can be ensured. One UE/DS-TT port is mapped into a plurality of ports, and each port corresponds to one PDU session. In this way, there are a plurality of PDU sessions between the UE/DS-TT and the UPF/NW-TT. When a PDU session is abnormally interrupted, other PDU sessions may normally complete message transmission. The information transmission method according to the scene embodiment mainly includes two processes: a message uplink and a message downlink.

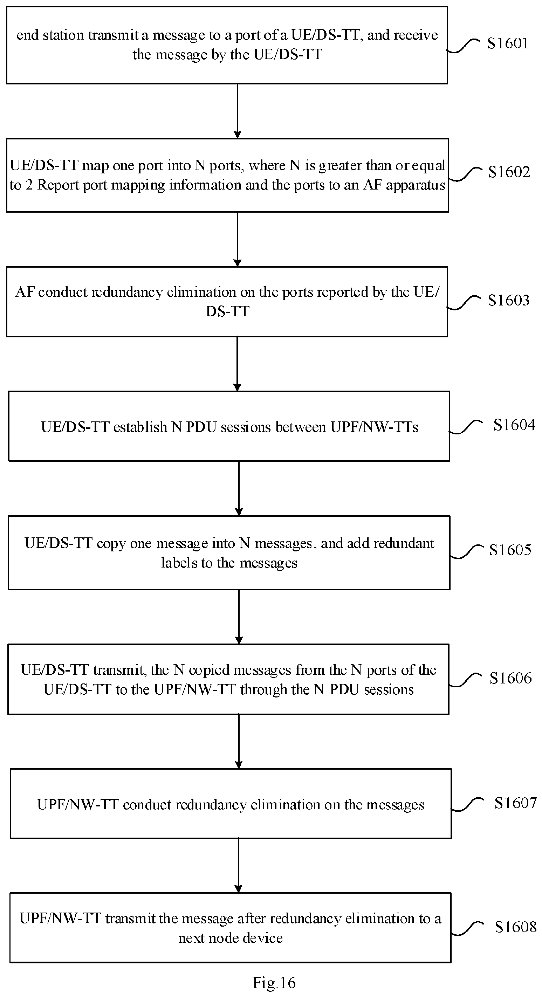

The message uplink is as follows: Fig. 16 is a flow diagram of a message uplink method according to a scene embodiment of the invention. As shown in Fig. 16, the flow includes the following steps:
S1601, an end station transmits a message to a port of a UE/DS-TT, and the UE/DS-TT receives the message.
S1602, the UE/DS-TT maps one port into N ports. N is greater than or equal to 2. Moreover, port mapping information and the ports are reported to an AF apparatus.

**Table 1 is a port information mapping table, as shown below:**

| External physical port of a 5GS bridge on a DS-TT | Mapped port number | PDU Session |
|---|---|---|
| Port-A1 | 1 | PDU Session 1 |
| Port-A 1 | 2 | PDU Session 2 |
| ... | ... | |
| Port-A1 | N | PDU Session N |

S1603, an AF conducts redundancy elimination on the ports reported by the UE/DS-TT.

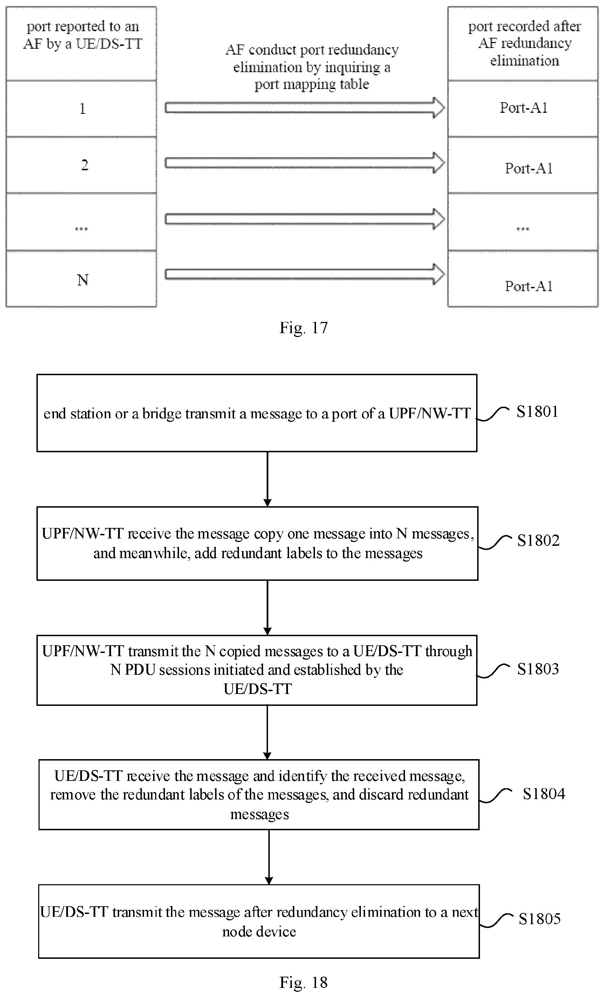

Fig. 17 is a schematic diagram of a port redundancy elimination principle according to a scene embodiment of the invention. As shown in Fig. 17, in the reported N ports, port-A1 is reserved after redundancy elimination.

S1604, the UE/DS-TT establishes N PDU sessions between UPF/NW-TTs.

S1605, the UE/DS-TT copies one message into N messages, and adds redundant labels to the messages.

The redundant labels may be added with an "R-TAG Ether Type field" in an Ethernet frame according to an IEEE802.1CB protocol, or user-defined parameters may be added to the messages as the redundant labels.

S1606, the UE/DS-TT transmits the N copied messages from the N ports of the UE/DS-TT to the UPF/NW-TT through the N PDU sessions.

S1607, the UPF/NW-TT conducts redundancy elimination on the messages.

The UPF/NW-TT obtains port mapping information of the UE/DS-TT from the AF. After a current message is identified as a duplicate message according to the redundant labels, the received duplicate message is deleted, such that redundancy elimination is completed.

S1608, the UPF/NW-TT transmits the message after redundancy elimination to a next node device.

The next node device may be a TSN bridge or a reception end station.

The message downlink is as follows: Fig. 18 is a flow diagram of a message downlink method according to a scene embodiment of the invention. As shown in Fig. 18, the flow includes the following steps:
S1801, an end station or a bridge transmits a message to a port of a UPF/NW-TT.
S1802, the UPF/NW-TT receives the message, copies one message into N messages, and meanwhile, adds redundant labels to the messages.
S1803, the UPF/NW-TT transmits the N copied messages to a UE/DS-TT through N PDU sessions initiated and established by the UE/DS-TT.
S1804, the UE/DS-TT receives the message and identifies the received message. The redundant labels of the messages are removed, and redundant messages are discarded.
S1805, the UE/DS-TT transmits the message after redundancy elimination to a next node device.

The next node device may be a TSN bridge or a reception end station.

### Scene embodiment 2

At present, under a 5G and TSN integrated network, transmission between a UE/DS-TT and a UPF/NW-TT is wireless. Due to influence of weather, environment or other abnormal conditions, a PDU session between the UE/DS-TT and the UPF/NW-TT may be abnormally interrupted or subjected to air interface packet loss. If only one PDU session is available, network transmission is unreliable. Thus, a message needs to be copied to establish a plurality of PDU sessions for transmission. Even if a PDU session is interrupted or subjected to air interface packet loss, the message may be transmitted through other PDU sessions.

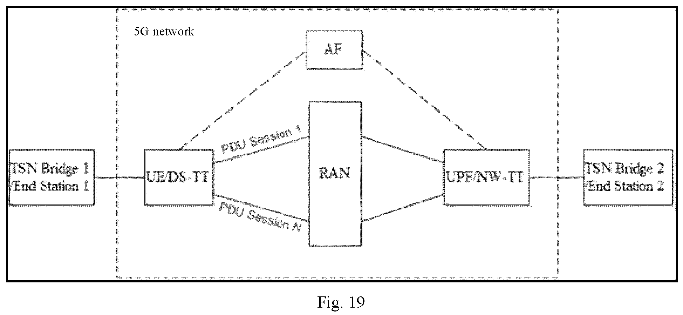

Fig. 19 is a schematic diagram of an information transmission method according to a scene embodiment of the invention. As shown in Fig. 19, a UE/DS-TT establishes a plurality of PDU sessions. Based on a principle described in 19, the flow in the scene embodiment of embodiments of the invention mainly includes uplink message transmission and downlink message transmission.

The uplink message transmission is as follows:

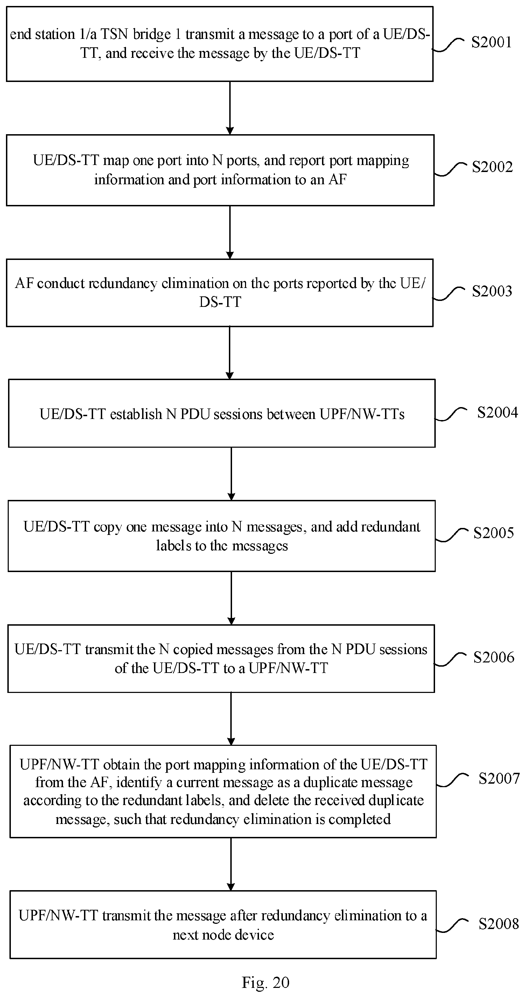

Fig. 20 is a flow diagram of a method for transmitting an uplink message according to a scene embodiment of the invention. As shown in Fig. 20, the flow includes the following steps:
S2001, an end station 1/a TSN bridge 1 transmits a message to a port of a UE/DS-TT, and the UE/DS-TT receives the message.
S2002, the UE/DS-TT maps one port into N ports, and reports port mapping information and port information to an AF.
S2003, the AF conducts redundancy elimination on ports reported by the UE/DS-TT.

A port redundancy elimination principle is shown in Fig. 17.

S2004, the UE/DS-TT establishes N PDU sessions between UPF/NW-TTs.

S2005, the UE/DS-TT copies one message into N messages, and adds redundant labels to the messages.

The redundant labels may be added with an "R-TAG Ether Type field" in an Ethernet frame according to an IEEE802.1CB protocol, or user-defined parameters may be added to the messages as the redundant labels.

S2006, the UE/DS-TT transmits the N copied messages from the N PDU sessions of the UE/DS-TT to a UPF/NW-TT.

S2007, the UPF/NW-TT obtains the port mapping information of the UE/DS-TT from the AF, a current message is identified as a duplicate message according to the redundant labels, and the received duplicate message is deleted, such that redundancy elimination is completed.

S2008, the UPF/NW-TT transmits the message after redundancy elimination to a next node device.

The next node device may be a TSN bridge 2 or a reception end station 2.

The downlink message transmission is as follows:

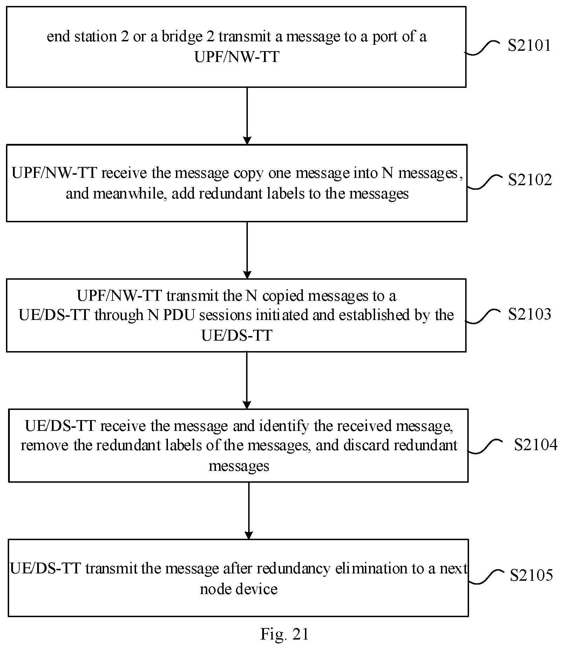

Fig. 21 is a flow diagram of a method for transmitting a downlink message according to a scene embodiment of the invention. As shown in Fig. 21, the flow includes the following steps:
S2101, an end station 2 or a bridge 2 transmits a message to a port of a UPF/NW-TT.
S2102, the UPF/NW-TT receives the message, copies one message into N messages, and meanwhile, adds redundant labels to the messages.
S2103, the UPF/NW-TT transmits the N copied messages to a UE/DS-TT through N PDU sessions initiated and established by the UE/DS-TT.
S2104, the UE/DS-TT receives the message and identifies the received message, the redundant labels of the messages are removed, and redundant messages are discarded.
S2105, the UE/DS-TT transmits the message after redundancy elimination to a next node device.

The next node device may be a TSN bridge 1 or a reception end station 1.

The embodiments of the invention provide a method and information transmission apparatus, and reliable and deterministic transmission of a 5GS system is implemented by establishing a plurality of PDU sessions. The method and apparatus may be applied to a 5G and TSN integrated network system, and a problem of transmission interruption caused by abnormal interruption of network transmission PDU sessions can be solved. An IEEE802.1CB protocol defines a solution of implementing redundant transmission. A full name of the protocol is a frame replication and elimination for reliability (FRER) protocol. The information transmission method according to the embodiments of the invention can implement processing of reliable transmission, deterministic transmission and redundant transmission in a 5G network defined by a 3GPP standard protocol.

What are described above are merely preferred embodiments of the embodiments of the invention and are not intended to limit the embodiments of the invention, and various changes and modifications may be made to the embodiments of the invention by those skilled in the art. Any modifications, equivalent substitutions, improvements, etc. within principles of the embodiments of the invention are intended to fall within the protection scope of the embodiments of the invention.

## Claims

1. An information transmission method, comprising:
mapping, by a device side time sensitive network translator, DS-TT, one port into N ports, wherein N is an integer greater than or equal to 2;
establishing, by the DS-TT, N protocol data unit, PDU, sessions corresponding to the N ports, between the DS-TT and a network side time sensitive network translator, NW-TT; and
copying, by the DS-TT, one uplink message into N uplink messages, and transmitting the N uplink messages to the NW-TT through the N PDU sessions.

2. The method according to claim 1, wherein before the mapping, by a DS-TT, one port into N ports, the method further comprises:
receiving, by the DS-TT, an uplink message from a first end station or a first bridge.

3. The method according to claim 1, wherein after the mapping, by a DS-TT, one port into N ports, the method further comprises:
reporting, by the DS-TT, information of the N ports and port mapping information to an application function, AF, to eliminate redundancy of the N ports.

4. The method according to claim 1, wherein after the copying, by the DS-TT, one uplink message into N uplink messages, the method further comprises:
adding, by the DS-TT, redundant labels to the N uplink messages.

5. The method according to claim 1, wherein after the transmitting the N uplink messages to the NW-TT through the N PDU sessions, the method further comprises:
transmitting port mapping information of the DS-TT to the NW-TT by an application function ,AF, and conducting, by the NW-TT, redundancy elimination on the N uplink messages according to redundant labels of the N uplink messages.

6. The method according to claim 1, wherein after the establishing, by the DS-TT, N PDU sessions corresponding to the N ports, the method further comprises:
copying, by the NW-TT, one downlink message into N downlink messages, and transmitting the N downlink messages to the DS-TT through the N PDU sessions.

7. The method according to claim 6, wherein before the copying, by the NW-TT, one downlink message into N downlink messages, the method further comprises:
receiving, by the NW-TT, a downlink message from a second end station or a second bridge.

8. The method according to claim 6, wherein after the copying, by the NW-TT, one downlink message into N downlink messages, the method further comprises:
adding, by the NW-TT, redundant labels to the N downlink messages.

9. An information transmission apparatus, comprising a device side time sensitive network translator, DS-TT, wherein the DS-TT comprises:
a port mapping module configured to map one port of the DS-TT into N ports, wherein N is an integer greater than or equal to 2;
a session establishing module configured to establish N protocol data unit ,PDU, sessions corresponding to the N ports between the DS-TT and a network side time sensitive network translator , NW-TT; and
an uplink message copying module configured to copy one uplink message into N uplink messages, and transmit the N uplink messages to the NW-TT through the N PDU sessions.

10. The apparatus according to claim 9, wherein the DS-TT further comprises:
an uplink message receiving module configured to receive an uplink message from a first end station or a first bridge.

11. The apparatus according to claim 9, wherein the DS-TT further comprises:
a port information reporting module configured to report information of the N ports and port mapping information to an application function, AF, to eliminate redundancy of the N ports.

12. The apparatus according to claim 9, wherein the uplink message copying module is further configured to add redundant labels to the N uplink messages.

13. The apparatus according to claim 9, further comprising a network side time sensitive network translator, NW-TT, wherein the NW-TT comprises:
a downlink message copying module configured to copy one downlink message into N downlink messages, and transmit the N downlink messages to the DS-TT through the N PDU sessions.

14. The apparatus according to claim 13, wherein the NW-TT further comprises:
a downlink message receiving module configured to receive a downlink message from a second end station or a second bridge.

15. The apparatus according to claim 13, wherein the downlink message copying module is further configured to add redundant labels to the N downlink messages.

16. A computer-readable storage medium, storing a computer program, wherein when the computer program is executed by a processor to implement the method according to any one of claims 1-8.

17. An electronic apparatus, comprising a memory, a processor, and a computer program stored in the memory and runnable on the processor, wherein when the computer program is executed by the processor to implement the method according to any one of claims 1-8.
